## Europäisches Patentamt
## European Patent Office
## Office européen des brevets

(19)

(11) Veröffentlichungsnummer: **0 183 244**
**B1**

(12) **EUROPÄISCHE PATENTSCHRIFT**

(45) Veröffentlichungstag der Patentschrift:
12.07.89

(51) Int. Cl.⁴: **B 29 C 53/10,** B 29 D 7/01,
B 29 K 7/00

(21) Anmeldenummer: 85115056.5

(22) Anmeldetag: 27.11.85

(54) Vorrichtung zum Einlegen von Seitenfalten in Kunststoffschlauchfolien.

(30) Priorität: 27.11.84 DE 3443236
26.02.85 DE 3506772
08.07.85 DE 3524391

(43) Veröffentlichungstag der Anmeldung:
04.06.86 Patentblatt 86/23

(45) Bekanntmachung des Hinweises auf die Patenterteilung:
12.07.89 Patentblatt 89/28

(84) Benannte Vertragsstaaten:
FR GB IT

(56) Entgegenhaltungen:
DE-A-2 248 516
DE-B-1 288 295
DE-B-2 510 515
FR-A-1 543 062
GB-A-1 215 715
US-A-3 897 530

(73) Patentinhaber: Windmöller & Hölscher,
Münsterstrasse 48- 52, D-4540 Lengerich i.W. (DE)

(72) Erfinder: Peters, Rudolf, Dipl.- Ing.,
Orchideenstrasse 4, D-4540 Lengerich (DE)

(74) Vertreter: Gossel, Hans, Dipl.- Ing., Rechtsanwälte
E. Lorenz - B. Seidler M. Seidler - Dipl.- Ing. H.
K. Gossel Dr. I. Philipps - Dr. P.B. Schäuble Dr.
S. Jackermeier Widenmayerstrasse 23, D-8000
München 22 (DE)

EP 0 183 244 B1

## Beschreibung

Die Erfindung betrifft eine Vorrichtung zum Einlegen von Seitenfalten in Kunststoffschlauchfolien nach dem Oberbegriff des Patentanspruchs 1.

Bei einer aus der Veröffentlichung DE-A-2 248 516 bekannten Vorrichtung dieser Art sind die aus Seitenfaltenblechen bestehenden Faltelemente in ihrer Eintauchtiefe und ihrer Neigung einstellbar und mittels Klemmschrauben feststellbar. Auch bei mittiger und symmetrischer Anordnung der Faltelemente zu den Flachlegeplatten und dem Spalt der den flachgelegten Schlauch abziehenden Abquetschwalzen kann es zu einem Verlaufen der Faltkanten der Seitenfalten in Abweichung von dem gewünschten Sollwert kommen, das seine Ursache in der Art und Form der Folienblase, dem verarbeiteten Material und insbesondere auch bei einem reversierenden Abzug in der Rotation der Flachlegeplatten und der Abquetschwalzen um die Schlauchfolienachse hat.

Aufgabe der Erfindung ist es daher, eine automatisch arbeitende Vorrichtung der eingangs angegebenen Art zu schaffen, mit der sich trotz an der Folienblase auftretender Störeinflüsse Seitenfalten derart einlegen lassen, daß deren äußeren Kanten in dem flachgelegten Folienschlauch eine vorbestimmbare Sollage, vorzugsweise eine im Querschnitt fluchtende Lage zueinander einnehmen.

Erfindungsgemäß wird diese Aufgabe bei einer Vorrichtung der gattungsgemäßen Art durch die kennzeichnenden Merkmale des Patentanspruchs 1 gelöst.

Die erfindungsgemäße Vorrichtung kann zwischen der ringförmigen Extrusionsdüse mit zentralen axialen Luftzu- und Luftabführungsleitungen und den Flachlegeplatten einer Folienblasanlage angeordnet sein. Sie kann aber auch bei Folienverarbeitungsmaschinen, beispielsweise Beutel- oder Sackherstellungsmaschinen, Anwendung finden, wenn der von einer Vorratsrolle abgezogene Folienschlauch wieder zu einer Folienblase aufgeblasen wird.

Bei der erfindungsgemäßen Vorrichtung läßt sich sowohl durch eine Verschwenkung der hinteren Bereiche der Faltelemente in Querrichtung als auch durch deren Drehung um deren Längsachse die Lage der äußeren Faltkanten der Seitenfalten in dem flachgelegten Schlauch wirksam beeinflussen. Die von dem Fühler gemessenen Abweichungen einer oder beider äußeren Kanten der Seitenfalten einer jeden Seite werden einem Regler zugeführt, der entsprechend die Stelleinrichtungen beaufschlagt, bis die gewünschte Sollage der äußeren Kanten der Seitenfalten erreicht ist. Dabei ist durch die üblichen regelungstechnischen Maßnahmen der Trägheit des Systems Rechnung zu tragen.

Zweckmäßigerweise bestehen die Faltelemente aus plattenförmigen Faltkörpern in Form von gleichschenkeligen Dreiecken, die sich schonend an den Flachlegebereich der Folienblase anstellen lassen und deren Verschwenkung einen schnellen und wirksamen Einfluß auf die Verlagerung der äußeren Faltkanten der Seitenfalten hat. Die Faltkörper können jede andere zum Einlegen der Falten geeignete Form haben, beispielsweise Schwertform, Schiffsbugform, Scheiben- oder Rollenform.

Um den Faltkörper in einfacher Weise in Querrichtung schwenken und um seine Längsachse drehen zu können, ist dieser zweckmäßigerweise im Bereich seiner Dreiecksspitze durch ein Universalgelenk, vorzugsweise ein Kugelgelenk, im Maschinengestell gelagert.

Zur Feststellung der Mittellage der Faltkörper können die Schwenkeinrichtungen mit deren Mittelstellung anzeigenden Schaltern versehen sein.

Die Ausrichtung der äußeren Faltkanten der Seitenfalten des flachgelegten Folienschlauches relativ zueinander oder die Einstellung dieser Faltkanten auf eine bestimmte Sollage durch Verschwenken der dreieckförmigen Faltelemente um ihre Längsachse oder durch eine seitliche Verschwenkung quer zur Richtung der Einstellung der Seitenfaltentiefe um in deren oberen Bereichen vorgesehene Schwenkachsen ist zufriedenstellend, wenn nur eine geringere Seitenfaltentiefe vorgesehen ist. Nimmt jedoch die Seitenfaltentiefe zu, so ergibt sich die Schwierigkeit, daß die Schwenkwege der Faltplatten sehr groß sein müssen, um die gewünschte Wirkung zu erzielen.

Nach einer weiteren Lösung wird die gestellte Aufgabe daher durch die kennzeichnenden Merkmale des Anspruchs 4 gelöst. Mit dieser erfindungsgemäßen Vorrichtung lassen sich bereits mit geringeren Verstellwegen der Faltelemente größere Verlagerungen der äußeren Faltkanten der Seitenfalten erreichen, weil die Seitenfaltenelemente nicht nur verschwenkt, sondern insgesamt translatorisch quer zur Richtung der Einstellung der Seitenfaltentiefe verschoben werden.

Zur Einstellung der unteren Stellung der Faltelemente bzw. von deren Schräglage können die im unteren Bereich der Faltelemente vorgesehenen querverlaufenden Führungen an zu diesen parallelen Trägern befestigt sein, die über Spindelmuttern auf gestellfesten Spindeln gelagert und über diese im wesentlichen parallel zu sich selbst verschieblich sind.

Zur Einstellung der Seitenfaltentiefe können die Faltelemente in ihren oberen Bereichen an je einer Stange angelenkt sein, die in dem oberen schlittenartigen Tragelement quer zu dessen Bewegungsrichtung längsverschieblich geführt und festlegbar ist.

Weitere Ausgestaltungen der Erfindung sind Gegenstand weiterer Unteransprüche.

Ausführungsbeispiele der Erfindung werden nachstehend anhand der Zeichnung näher erläutert. In dieser zeigt:

Fig. 1    eine Seitenansicht einer ersten Aus-

führungsform einer Folienabzug-seinrichtung mit Flachlegeplatten und Seitenfalten einlegenden Faltkörpern in schematischer Darstellung,

Fig. 2    einen Schnitt durch die Flachlege- und Abzugseinrichtung längs der Linie II - II in Fig. 1,

Fig. 3    einen Schnitt durch eine eine Seitenfalte einlegende Platte längs der Linie III - III in Fig. 2,

Fig. 4    eine der Fig. 1 entsprechende Darstellung einer zweiten Ausführungsform einer Einrichtung zum Einlegen von Seitenfalten,

Fig. 5    einen Schnitt durch die Stellvorrichtung längs der Linie V - V in Fig. 4,

Fig. 6    einen Schnitt durch die flachgelegte Schlauchfolie längs der Linie VI - VI in Fig. 4 und Fig. 1,

Fig. 7    eine Seitenansicht einer dritten Ausführungsform einer Folienabzugseinrichtung mit Flachlegeplatten und Seitenfalten einlegenden Faltelementen in schematischer Darstellung und

Fig. 8    einen Schnitt durch die Flachlege- und Abzugseinrichtung längs der Linie VIII - VIII in Fig. 7.

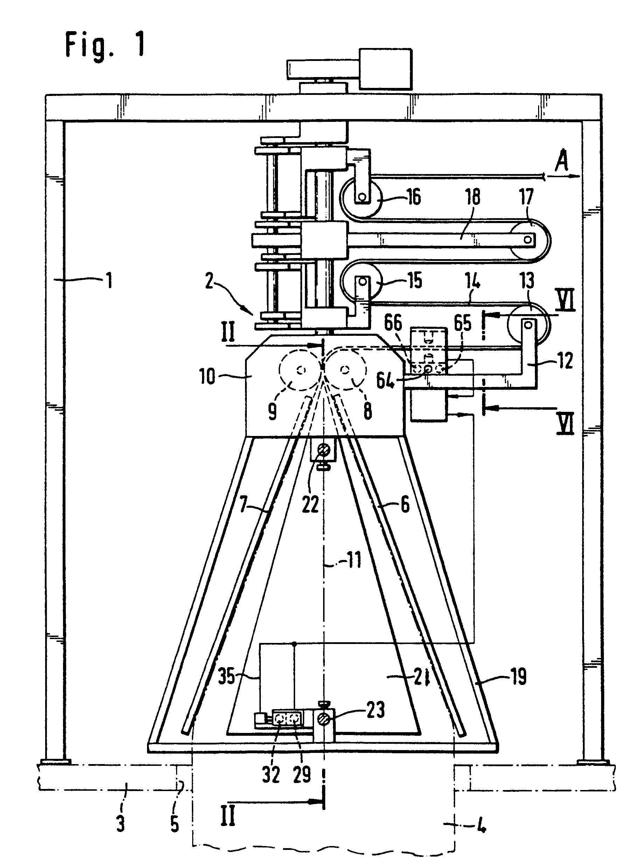

Fig. 1 zeigt das Gestell 1 einer reversierenden Flachlege- und Abzugsvorrichtung für extrudierte und zu Schlauchblasen 4 aufgeblasene Kunststoffolienschläuche. Der nicht dargestellte Extruder mit die Kunststoffschmelze zu einem Folienschlauch ausformenden Ringdüsen mit Luftaustausch durch den Düsenkopf befindet sich unterhalb der Flachlege- und Abzugseinrichtung 2 und ist von dieser durch eine Gebäudezwischenwand 3 getrennt. Der zu einer Blase 4 aufgeblasene Kunststoffolienschlauch tritt durch eine Öffnung 5 in der Zwischenwand bevor er zwischen den dachförmig zueinander angeordneten Flachlegeplatten 6, 7 flachgelegt, abgezogen und zu transportfähigen zylindrischen Rollen aufgewickelt wird.

Die Flachlegeplatten 6, 7 sind mit den Abquetsch- und Abzugswalzen 8, 9 in einem Gestell 10 angeordnet, das um die Schlauchfolienachse 11 reversierend um etwa 360° angetrieben ist, um Bereiche unterschiedlicher Wandstärken des Folienschlauches auf dem Wickel zu verteilen, um zylindrische Wickelrollen zu erhalten.

Mit dem Gestell 10 ist ein mitreversierend auskragender Arm 12 verbunden, in dem eine erste Umlenkwalze 13 für die flachgelegte Schlauchfolienbahn 14 drehbar gelagert ist. Anschließend läuft die flachgelegte Schlauchfolienbahn 14 über zwei Wendestangen 15, 16, zwischen denen eine weitere Umlenkwalze 17 an einem schwenkbaren Arm 18 gelagert ist. Diese Anordnung ist bekannt und ermöglicht es, die flachgelegte Schlauchfolienbahn 14 in Richtung des Pfeils A zu einem ortsfesten, nicht dargestellten Wickler zuzuführen.

Um in den Folienschlauch vor seinem Flachlegen Seitenfalten einzulegen, ist das Gestell 10 mit einem Rahmen 19 versehen, in dem in den Bereichen zwischen den Flachlegeplatten 6, 7 dreieckige Faltplatten 20, 21 angeordnet sind. Diese Platten sind gelenkig mit geradlinig in dem Gestell 19 geführten Stellstangen 22, 23 verbunden, so daß sich über die Stellstangen 22, 23 der Bereich, in dem die Seitenfalten eingelegt werden, und die Tiefe a der Seitenfalten einstellen lassen. Die Stellstangen 22 können aus den Kolbenstangen von Druckmittel-Kolben-Zylindereinheiten bestehen. Die Stellstangen 22 können auch aus einfachen Schiebestangen bestehen.

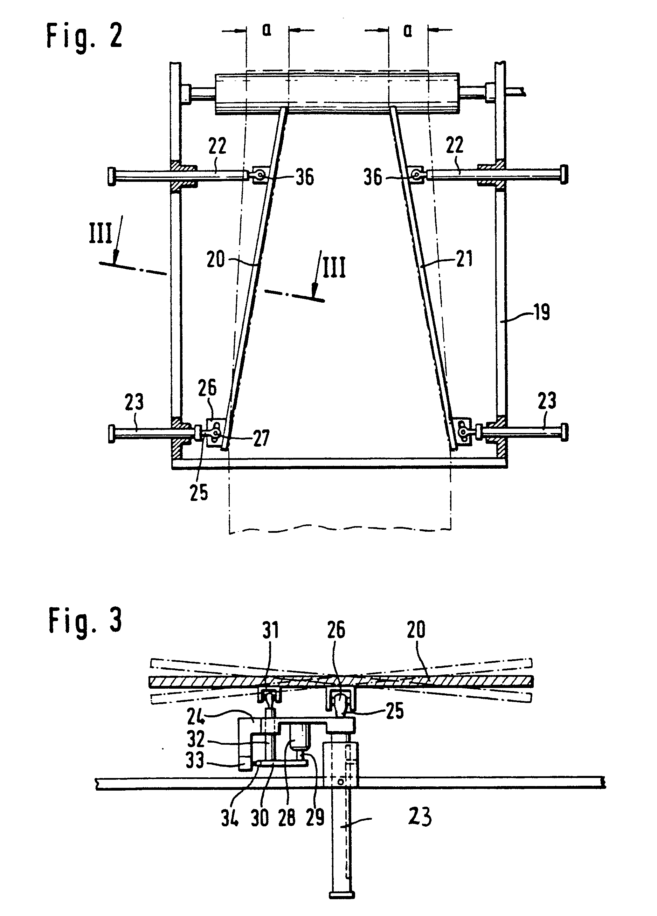

Bei dem Ausführungsbeispiel nach Fig. 2 ist die Stellstange 25 gelenkig mit einem Gleitstein 26 versehen, der in dem Langloch 27 zum Ausgleich der sich aus unterschiedlichen Schrägstellungen der Faltplatten 20 ergebenden Längen längsverschieblich geführt ist.

Bei dem Ausführungsbeispiel nach den Fig. 1 bis 3 sind die Faltplatten 20, 21 zur Einstellung der beiden äußeren Kanten der Seitenfalten um ihre Längsachsen schwenkbar, wie dies nachstehend anhand der Fig. 3 erläutert wird:

Die Stellstange 25 der Stelleinrichtung ist fest mit einem Querträger 24 verbunden. Auf dem Querträger ist der Zylinder einer Druckmittel-Kolben-Zylindereinheit 28 oder ein elektrischer Spindelmotor befestigt, deren Kolbenstange 29 ein Querjoch 30 trägt, das fest mit der zu der Kolbenstange 29 parallelen Stellstange 32 verbunden ist. Die Stellstange 32 ist durch das Universalgelenk 31 im Abstand von dem Gelenk 26 mit der Faltplatte 20 verbunden. Durch Aus- und Einfahren der Kolbenstange 29 läßt sich die Faltplatte 20 um ihre Längsachse verschwenken, wie dies durch strichpunktierte Linien dargestellt ist.

Der Querträger 24 ist mit einer Abwinkelung 33 versehen, die mit einem Schaltelement 34 versehen ist, das mit dem Querjoch 30 zusammenwirkt und dem Regler R über die Leitung 35 die Mittelstellung der Faltplatte 20 meldet.

Um ein Schwenken der Faltplatten 20, 21 um ihre Mittellinien zu ermöglichen, sind auch deren Gelenke 26 und 36 als Universalgelenke ausgebildet.

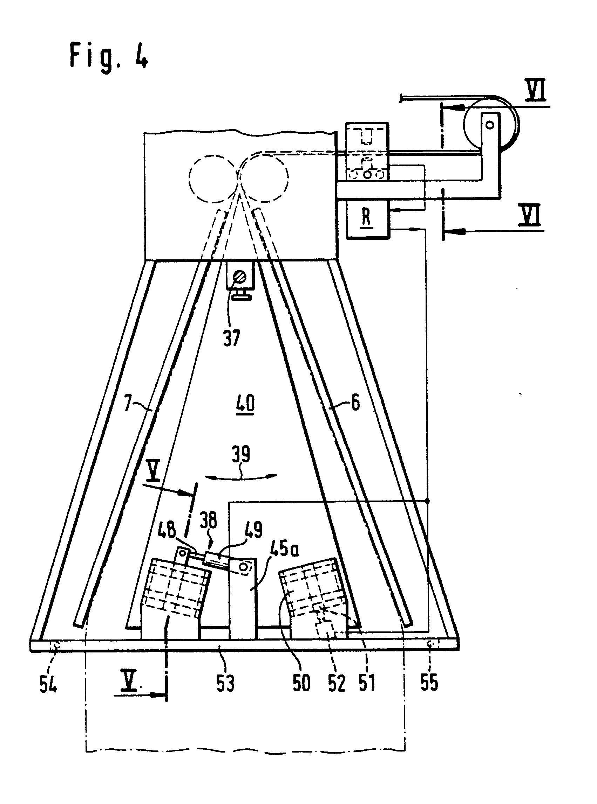

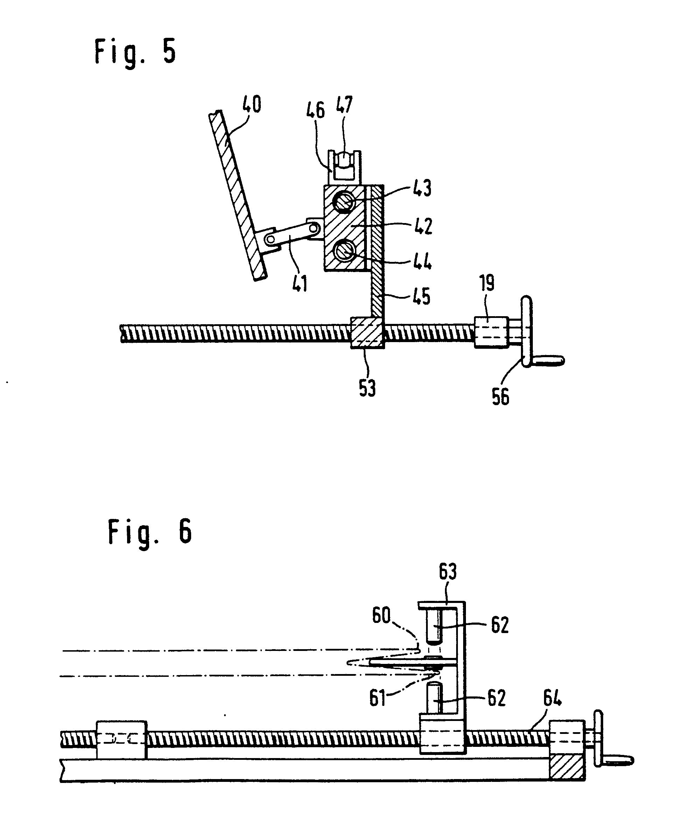

Bei dem Ausführungsbeispiel nach den Fig. 4 und 5 stehen die Faltplatten im Horizontalschnitt rechtwinkelig zu den Flachlegeplatten 6, 7 und sind an den oberen Stellstangen 37 allseitig schwenkbar durch Universalgelenke gelagert. Weiterhin ist eine Stellvorrichtung 38 vorgesehen, durch die die Faltplatten in Richtung des Doppelpfeils 39 in ihren Ebenen hin- und herschwenkbar sind.

Die Verstellung der Faltplatten wird nachstehend nur an der vorderen Faltplatte 40 erläutert. Der untere Bereich der dreieckigen Faltplatte 40 ist über die Koppel 41 mit dem Schlitten 42 verbunden. Der Schlitten 42 ist über Führungsbohrungen auf im wesentlichen zueinander parallelen Führungsstangen 43, 44 geführt, die über Querstücke auf dem Tragstück 45 befestigt sind. Der Schlitten 42 trägt einen gegabelten Lagerbock 46, in dem der Kopf 47 der Kolbenstange 48 des Hydraulikzylinders 49 bzw. elektrischen Stellmotors schwenkbar gelagert ist. Der Zylinder 49 ist ebenfalls an einem Tragstück 45a schwenkbar gelagert. Durch Aus- und Einfahren der Kolbenstange 48 läßt sich somit die dreieckige Faltplatte 40 in ihrer Ebene hin- und herverschwenken. Aus Symetriegründen ist eine entsprechende zweite Führungseinrichtung 50 vorgesehen, die mit einem Schaltnocken 51 versehen ist, der zur Anzeige der Mittelstellung der Faltplatte 40 mit dem Schalter 52 zusammenwirkt, der, wie auch das Tragstück 45, auf einem Querträger 53 befestigt ist. Zur Tiefeneinstellung der Faltplatte 40 ist der Träger 53 mit Spindelmuttern 54, 55 versehen, in die mit Handrädern 56 versehene Spindeln eingeschraubt sind. Die Spindeln sind in dem mit dem Gestell 10 mitrotierenden Rahmen 19 drehbar gelagert.

Die Lage der äußeren Faltkanten 60, 61 der Seitenfalten des flachgelegten Schlauches wird, wie aus Fig. 6 ersichtlich, durch optoelektronische Tastelemente 62 ermittelt. Die Tastelemente 62 sind in einem Tragrahmen 63 angeordnet, der durch eine mit einem Handrad versehene Spindel 64 auf Führungsstangen 65, 66 querverschieblich ist.

Die von den optoelektronischen Tastelementen 62 abgegebenen Signale werden dem Regler R zugeführt, der die erforderlichen Stellsignale an die Stellvorrichtungen abgibt, die die Faltplatten in ihrer Ebene verschwenken und/oder um ihre Längsachse um so große Beträge verdrehen, daß die äußeren Kanten der Seitenfalten 60, 61 in Draufsicht miteinander fluchten oder einen vorgegebenen gewünschten Abstand voneinander aufweisen.

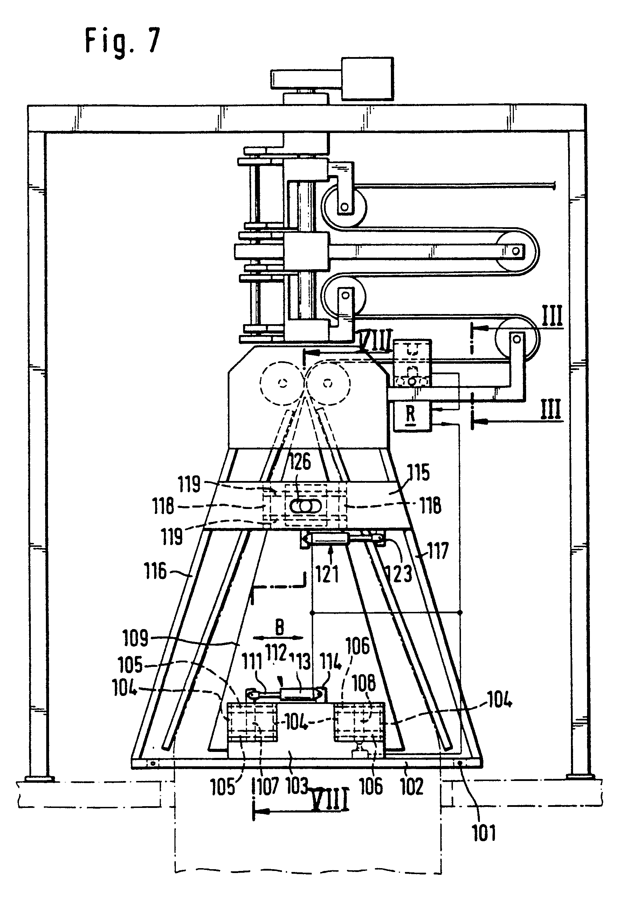

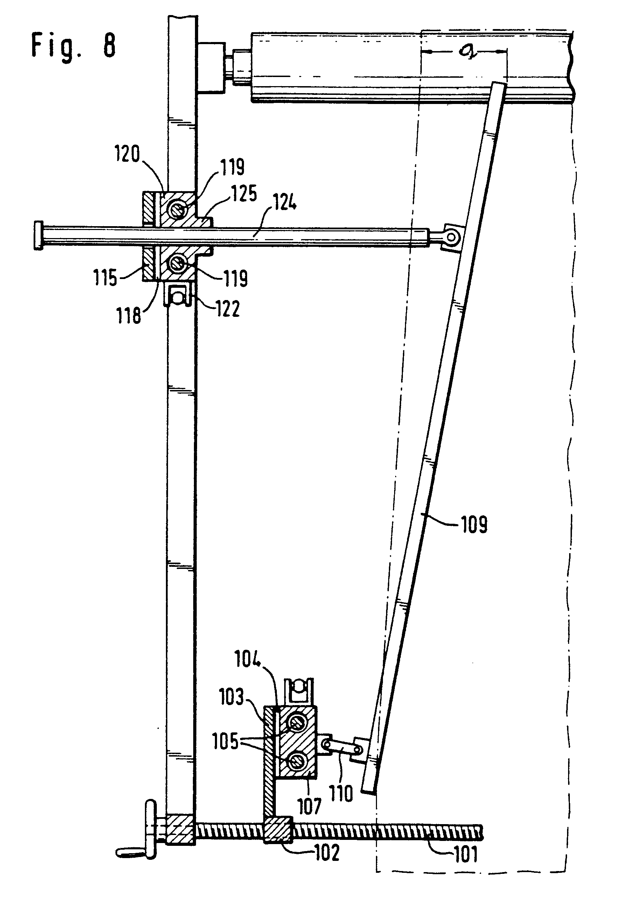

Das dritte Ausführungsbeispiel der reversierenden Folienabzugseinrichtung wird nun anhand der Fig. 7 und 8 erläutert.

Die Faltelemente 109 bestehen wie bei der Vorrichtung nach den Fig. 1 bis 6 aus plattenförmigen Faltkörpern in Form von gleichschenkeligen Dreiecken. Nackstehend werden daher die Unterschiede des Ausführungsbeispiels nach den Fig. 6 bis 8 gegenüber dem ersten Ausführungsbeispiel beschrieben.

Auf im Gestell drehbar gelagerten Spindeln 101 sind über Spindelmuttern Träger 102 parallel zu sich selbst verschieblich gelagert. Auf die Träger 102 sind Seitenteile 103 aufgesetzt, die mit Haltestücken 104 fest verbunden sind. Jeweils zwei Haltestücke 104 tragen zwei parallel übereinander angeordnete Führungsstangen 105 und 106.

Auf den beiden Führungsstangen 105 ist ein schlittenartiges Tragstück 107 und auf den beiden Führungsstangen 106 ein schlittenartiges Tragstück 108 hin- und herbeweglich gelagert. Sie sind mit der Faltplatte 109 über Gelenkhebel 110 verbunden. Mit einem dieser Schlitten, nämlich mit dem Schlitten 107, ist die Kolbenstange 111 einer Kolbenzylindereinheit 112 befestigt, dessen Zylinder 113 über eine Konsole 114 vom Tragstück 103 gehalten ist.

Oberhalb des Tragstückes 103 ist eine Platte 115 vorgesehen, welche die beiden Rahmenteile 116 und 117 fest miteinander verbindet. Diese Platte 115 weist zwei Halter 118 auf, in denen Führungsstangen 119 fest gelagert sind. Auf diesen Führungsstangen 119 ist ein Schlitten 120 über eine Kolbenzylindereinheit 121 hin und her beweglich, wobei der zugehörige Zylinder mit einer am Schlitten befestigten Konsole 122 verbunden ist und die Kolbenstange an einen mit der Platte 115 verschweißten Hebel 123 angreift. In dem Schlitten 120 ist eine Stellstange 124 geführt, die über eine nicht näher dargestellte Klemmschraube 125 verriegelbar ist. Aus den Fig. 7 und 8 ist zu ersehen, daß die Stellstange 124 auch noch durch die Platte 115 hindurchragt, wobei diese Platte 115 mit einem Langeloch 126 versehen ist.

Zur Grundeinstellung wird die Faltplatte 109 durch Betätigung der Spindelmutter 101 und durch axiales Verschieben der Stellstange 124 in eine vorbestimmte Schräglage gebracht, wobei das Maß a (siehe Fig. 8) die Tiefe der einzulegenden Seitenfalte bestimmt. Wird nun über die in der Fig. 6 dargestellte Einrichtung ein Versatz der beiden äußeren Kanten einer Seitenfalte festgestellt, dann werden die Kolbenzylindereinheiten 112 und 121 gleichzeitig betätigt und dadurch die Faltplatte 109 in Pfeilrichtung B (siehe Fig. 8) seitlich verschoben.

**Patentansprüche**

1. Vorrichtung zum Einlegen von Seitenfalten in Kunststoffschlauchfolien

mit zwei keilförmig zueinander angeordneten Flachlegeplatten (6, 7), die den auf der Abzugsseite liegenden Teil einer aufgeblasenen Folienblase (4) begrenzen, den aus der Folienblase (4) abgezogenen Folienschlauch (14) flach legen und die vor den Abquetschwalzen (8, 9) einer Folienabzugs- und Aufwickeleinrichtung angeordnet sind, und

mit Faltelementen (20, 21), die die Seitenfalten einlegen, im Bereich der durch den Spalt der Abquetschwalzen (8, 9) verlaufenden und die Schlauchfolienachse (11) enthaltenden Mittelebene in den einander gegenüber liegenden freien Bereichen der Flachlegeplatten (6, 7) angeordnet sind und die zur Einstellung der Tiefe der Seitenfalten in Richtung der Schlauchfolienachse (11) hin- und herbewegbar sind,

dadurch gekennzeichnet,

daß Fühler (62) zur Ermittlung der Lage der äußeren Faltkanten (60, 61) der Seitenfalten des flachgelegten oder fast flachgelegten Folienschlauches (14) vorgesehen sind und

daß die Faltelemente (20, 21, 40) im Bereich ihrer in Laufrichtung des Folienschlauches (14) vorderen Enden allseitig schwenkbar gelagert und im Bereich ihrer gegenüberliegenden hinteren Enden mit Stelleinrichtungen (28 - 31; 41 - 49) versehen sind, die bei einer gemessenen Abweichung der äußeren Faltkanten (60, 61) von ihrer Sollage die Faltelemente (20, 21, 40) quer zur Richtung der Einstellung der Seitenfaltentiefe und/oder um ihre Längsachsen verschwenken, bis die gemessene Lage der Faltkanten mit deren Sollage übereinstimmt.

2. Vorrichtung nach Anspruch 1, dadurch gekennzeichnet, daß die Faltelemente aus plattenförmigen Faltkörpern (20, 21, 40) in Form von gleichschenkeligen Dreiecken bestehen.

3. Vorrichtung nach Anspruch 1 oder 2, dadurch gekennzeichnet, daß die Stelleinrichtungen mit die Mittelstellungen der Faltkörper anzeigenden Schaltelementen versehen sind.

4. Vorrichtung nach dem Oberbegriff des Patentanspruchs 1, dadurch gekennzeichnet, daß Fühler (62) zur Ermittlung der Lage der äußeren Faltkanten (60, 61) der Seitenfalten des flachgelegten oder fast flachgelegten Folienschlauches (14) vorgesehen sind, die Stelleinrichtungen beaufschlagen, die die Faltelemente (109) bei einer gemessenen Abweichung der äußeren Faltkanten von ihrer Sollage quer zur Richtung der Einstellung der Seitenfaltentiefe bewegen, bis die gemessene Lage der Faltkanten mit deren Sollage übereinstimmt, und

daß die Faltelemente (109) gelenkig mit schlittenartigen Tragstücken (107, 108, 120) verbunden sind, die in mit dem Gestell verbundenen, quer zur Richtung der Einstellung der Seitenfaltentiefe verlaufenden Führungen (105, 106) verschieblich geführt und mit Verschiebeeinrichtungen (112, 121) versehen sind.

5. Vorrichtung nach Anspruch 4, dadurch gekennzeichnet, daß querverlaufende Führungen (105, 106, 119) in den unteren und oberen Bereichen der Faltelemente (109) vorgesehen sind.

6. Vorrichtung nach Anspruch 4 oder 5, dadurch gekennzeichnet, daß die im unteren Bereich der Faltelemente (109) vorgesehenen querverlaufenden Führungen (105, 106) an zu diesen parallelen Trägern (102) befestigt sind, die über Spindelmuttern auf im Gestell gelagerten Spindeln (101) gelagert und über diese im wesentlichen parallel zu sich selbst verschieblich sind.

7. Vorrichtung nach einem der Ansprüche 4 bis 6, dadurch gekennzeichnet, daß die Faltelemente (109) in ihren oberen Bereichen an je einer Stange (124) angelenkt sind, die in dem oberen schlittenartigen Tragelement (120) quer zu dessen Bewegungssrichtung längsverschieblich geführt und festlegbar ist.

8. Vorrichtung nach einem der Ansprüche 4 bis 7, dadurch gekennzeichnet, daß zur Verschiebung der schlittenartigen Tragelemente (107, 108, 120) Druckmittelkolbenzylindereinheiten (112, 121) vorgesehen sind, deren einen Enden an die Tragelemente und deren anderen Enden an dem Gestell bzw. an mit diesem verbundenen Trägern angelenkt sind.

## Claims

1. Apparatus for putting side folds into tubular plastics foils comprising

two flattening plates (6, 7) which are arranged in a wedge-like configuration relative to each other, which restrict the portion, disposed on the draw-off side, of an inflated foil bubble (4), flatten the foil tube (14) which is drawn off from the foil bubble (4), and are arranged upstream of the squeeze rollers (8, 9) of a foil draw-off and winding-on device, and

folding elements (20, 21) which put in the side folds, are arranged in the region of the central plane which extends through the gap of the squeeze rollers (8, 9) and which includes the axis (11) of the tubular foil, in the mutually oppositely disposed free regions of the flattening plates (6, 7), and can be reciprocated in the direction of the axis (11) of the tubular foil to adjust the depth of the side folds,

characterised in that sensors (62) are provided for detecting the position of the outer fold edges (60, 61) of the side folds of the flattened or almost flattened foil tube (14), and

the folding elements (20, 21, 40) are mounted pivotably in all directions in the region of their ends which are the front ends in the direction of movement of the foil tube (14), and in the region of their oppositely disposed rear ends are provided with adjusting means (28 - 31; 41 - 49) which, upon a measured deviation of the outer fold edges (60, 61) from their reference position, pivot the folding elements (20, 21, 40) transversely with respect to the direction of adjustment of the side fold depth and/or about their longitudinal axes until the measured position of the fold edges coincides with the reference position thereof.

2. Apparatus according to claim 1 characterised in that the folding elements comprise plate-like folding members (20, 21, 40) in the form of isosceles triangles.

3. Apparatus according to claim 1 or claim 2 characterised in that the adjusting means are provided with switching elements for indicating the central positions of the folding members.

4. Apparatus according to the classifying portion of claim 1 characterised in that sensors (62) are provided for detecting the position of the outer fold edges (60, 61) of the side folds of the flattened or almost flattened foil tube (14), which act on adjusting means which move the folding elements (109), upon a measured deviation of the outer fold edges from their reference position, transversely with respect to the direction of adjustment of the depth of the side folds until the measured position of the fold edges coincides with the reference position thereof, and

the folding elements (109) are pivotally connected to carriage-like carrier members (107, 108, 120) which are slidably guided in guides (105, 106) connected to the frame structure and extending transversely with respect to the direction of adjustment of the depth of the side folds, and are provided with displacement means (112, 121).

5. Apparatus according to claim 4 characterised in that transversely extending guides (105, 106, 119) are provided in the lower and upper regions of the folding elements (109).

6. Apparatus according to claim 4 or claim 5 characterised in that the transversely extending guides (105, 106) in the lower region of the folding elements (109) are secured to carriers (102) which are parallel thereto, which are mounted by way of spindle nuts on spindles (101) mounted in the frame structure, and are displaceable by way of the spindles substantially parallel to themselves.

7. Apparatus according to one of claims 4 to 6 characterised in that in their upper regions the folding elements (109) are each pivotally connected to a respective rod (124) which is longitudinally slidably guided in the upper carriage-like carrier element (120) transversely with respect to the direction of movement thereof, and can be fixed in position therein.

8. Apparatus according to one of claims 4 to 7 characterised in that pressure fluid piston cylinder units (112, 121) are provided for displacement of the carriage-like carrier elements (107, 108, 120), the one ends of the piston cylinder units being pivotally connected to the carrier elements and the other ends thereof being pivotally connected to the frame structure or to carriers connected thereto.

**Revendications**

1. Dispositif pour former des plis latéraux dans des films tubulaires en plastique,

comportant deux plateaux (6, 7) en disposition conique l'un par rapport à l'autre pour mettre le film à plat, qui délimitent la partie couchée côté sortie d'une bulle de film (4) gonflée par soufflage, qui posent à plat le film tubulaire (14) retiré de la bulle de film (4) et qui sont disposés en amont des rouleaux d'écrasement (8, 9) d'un dispositif détacheur et d'enroulement du film, ainsi que

des éléments de pliage (20, 21) qui forment les plis latéraux, qui sont disposés dans les zones libres se faisant face des plateaux servant à mettre le film à plat (6, 7) dans la zone du plan moyen comportant l'axe du film tubulaire (11) et qui s'étend à travers la fente des rouleaux d'écrasement (8, 9), lesdits éléments de pliage (20, 21) pouvant être déplacés dans un mouvement de va-et-vient pour le réglage de la profondeur des plis latéraux dans le sens de l'axe du film tubulaire (11),

caractérisé en ce que

des palpeurs (62) sont prévus pour saisir la position des bords de pli extérieurs (60, 61) des plis latéraux du film tubulaire (14) mis à plat ou presque mis à plat et que

les éléments de pliage (20, 21, 40) sont logés de manière à pouvoir pivoter de tous côtés dans la zone de leurs extrémités avant par rapport à l'avancement du film tubulaire (14) et qui dans la zone de leurs extrémités arrière opposées sont pourvus d'un dispositif de réglage (28 - 31; 41 - 49) qui lorsqu'un écart des bords de pli extérieurs (60, 61) a été mesuré par rapport à la position programmée pivote des éléments de pliage (20, 21, 40) transversalement par rapport au sens du réglage de la profondeur des plis latéraux et/ou autour de leurs axes longitudinaux jusqu'à ce que la position mesurée des bords de pli concorde avec leur position programmée.

2. Dispositif selon la revendication 1, caractérisé en ce que les éléments de pliage consistent en corps de pliage (20, 21, 40) sous forme de plateaux qui ont une forme de triangle isocèle.

3. Dispositif selon les revendications 1 ou 2, caractérisé en ce que les dispositifs de réglage sont pourvus d'éléments de commande affichant les positions médianes des corps de pliage.

4. Dispositif selon la partie caractérisante de la revendication 1, caractérisé en ce que des palpeurs (62) pour la détermination de la position des bords de pli extérieurs (60, 61) des plis latéraux du film tubulaire (14) mis à plat ou presque mis à plat sont prévus, qui agissent sur les dispositifs de réglage qui déplacent les éléments de pliage (109) lorsqu'un écart des bords de pli extérieurs par rapport à leur position programmée a été mesuré, transversalement par rapport à la direction du réglage de la profondeur de plis latéraux jusqu'à ce que la position mesurée des bords de pli concorde avec leur position programmée, et que

les éléments de pliage (109) sont raccordés par une articulation avec des pièces portantes (107, 108, 120) à la manière de chariots qui sont guidées de manière à pouvoir être déplacées dans des guidages (105, 106) qui sont solidaires du bâti et s'étendent transversalement par rapport au sens du réglage de la profondeur des plis latéraux, lesdites pièces portantes étant pourvues de dispositifs de déplacement (112, 121).

5. Dispositif selon la revendication 4, caractérisé en ce que les guidages transversaux (105, 106, 119) sont prévus dans les zones inférieures et supérieures des éléments de pliage (109).

6. Dispositif selon les revendications 4 ou 5, caractérisé en ce que les guidages transversaux (105, 106) prévus dans la zone inférieure des éléments de pliage (109) sont fixés à des supports parallèles (102) par rapport aux guidages de pliage, qui sont montés sur des broches (101) logées dans le bâti par l'intermédiaire d'écroux filetés et qui peuvent être déplacés par l'intermédiaire de broches dans une direction substantiellement parallèle à celles-ci.

7. Dispositif selon l'une des revendications 4 à 6, caractérisé en ce que les éléments de pliage (109), en leurs zones supérieures, sont montés chacun à une barre (124) par une articulation, ladite barre étant guidée de manière à pouvoir se déplacer dans le sens longitudinal et fixée dans l'élément portant supérieur (120) à la manière d'un chariot, transversalement par rapport au sens du mouvement de l'élément portant.

8. Dispositif selon l'une des revendications 4 à 7, caractérisé en ce que des unités piston /cylindre à fluide (112, 121) sont prévues pour le déplacement des éléments portants (107, 108, 120) à la manière d'un chariot, dont les unes de leurs extrémités sont montées par une articulation aux éléments portants et dont les autres de leurs extrémités sont montées par une articulation sur le bâti ou les supports raccordés à ce dernier.

# Fig. 1

**Fig. 2**

**Fig. 3**

# Fig. 4

# Fig. 5

# Fig. 6

# Fig. 7

Fig. 8